# EUROPÄISCHE PATENTSCHRIFT

(11) **EP 2 807 500 B1**
(45) Veröffentlichungstag und Bekanntmachung des Hinweises auf die Patenterteilung: **21.11.2018**
(21) Anmeldenummer: 12808719.4
(22) Anmeldetag: 07.12.2012
(51) Int. Cl.: G01S 7/529

(54) **UMFELDERFASSUNGSVORRICHTUNG UND DAZUGEHÖRIGES VERFAHREN ZUR BESTIMMUNG DER POSITION UND/ODER DER BEWEGUNG VON EINEM OBJEKT**
ENVIRONMENT DETECTION DEVICE AND RELATED METHOD FOR DETERMINING THE POSITION AND/OR MOTION OF AN OBJECT
DISPOSITIF DE DÉTECTION D'ENVIRONNEMENT ET PROCÉDÉ CORRESPONDANT POUR LA DÉTERMINATION DE LA POSITION ET/OU DU DÉPLACEMENT D'UN OBJET

(30) Priorität: 24.01.2012 DE 102012200991
(43) Veröffentlichungstag der Anmeldung: 03.12.2014
(73) Patentinhaber: Robert Bosch GmbH, 70442 Stuttgart (DE)
(72) Erfinder: Karl, Matthias, 76275 Ettlingen (DE)
(86) Internationale Anmeldenummer: PCT/EP2012/074764
(87) Internationale Veröffentlichungsnummer: WO 2013/110389

(56) Entgegenhaltungen:
- GB-A- 1 257 520
- GB-A- 2 161 932
- US-A- 3 624 596
- US-A- 3 742 438
- US-A- 4 464 738
- US-A- 5 231 608

## Beschreibung

### Bereich der Erfindung

Die vorliegende Erfindung betrifft eine Umfelderfassungsvorrichtung zur Bestimmung der Position und/oder der Bewegung von mindestens einem Objekt in der Umgebung eines Bewegungshilfsmittels mittels mindestens eines ausgesendeten und an dem Objekt reflektierten akustischen Pulses. Auch betrifft die Erfindung ein entsprechendes mittels der erfindungsgemäßen Umfelderfassungsvorrichtung durchführbares Verfahren und ein Fahrzeug mit einer erfindungsgemäßen Umfelderfassungsvorrichtung.

### Stand der Technik

Zur akustischen Umfelderfassung von Fahrzeugen werden derzeit üblicherweise pulsweise messende Ultraschallsysteme verwendet, bei denen über einen Elektro-Akustik-Wandler kurze, mit Signalpulsen mit einer Pulsdauer von 0,3 ms modulierte, sinusförmige Trägersignale mit einer Frequenz von 48 KHz ausgesandt werden. Bei solchen Ultraschallsystemen wird der Abstand zu Objekten der Umgebung anhand der Laufzeit der Reflexe der ausgesandten Pulse an diesen Objekten und der Schallgeschwindigkeit bestimmt.

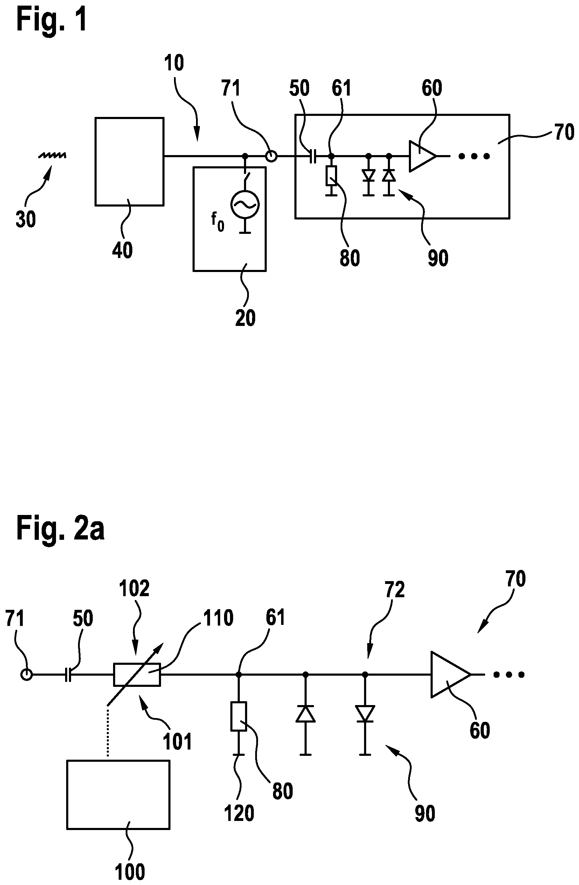

In der Figur 1 ist ein solches aus dem Stand der Technik bekanntes Ultraschallsystem 10 dargestellt. Ein Sendeimpulsgenerator 20 erzeugt ein dem auszusendenden Puls 30 entsprechendes leistungsstarkes Sendesignal, indem er während der Sendepulsdauer ein elektrisches Signal auf den Elektro-Akustik-Wandler 40 gibt. Der Wandler 40 beginnt in der Frequenz f₀ des Sendepulses zu schwingen und somit einen akustischen Sendepuls auszugeben. Der Echozyklus, d.h. das Empfangen der Echos, beginnt insbesondere mit der Sendepulsgenerierung. Wird der ausgesandte akustische Puls an einem Objekt reflektiert, gelangt ein Teil der ausgesandten akustischen Energie zurück in den Elektro-Akustik-Wandler 40, der die eintreffenden akustischen Signale (nicht dargestellt) wieder in elektrische Signale zurück verwandelt. Über den Koppelkondensator 50 gelangen die elektrischen Echosignale in den Verstärker 60, der diese der nachfolgenden, mittels der Auswerteeinheit 70 durchgeführten Auswertung unterzieht.

Zur effektiven Energieausnutzung ist die Kapazität C des Koppelkondensators 50 zumeist so ausgelegt, dass seine Impedanz 1/(2π*f₀*C) bei der Arbeitsfrequenz f₀ gegenüber dem Wiederstandswert Rᵢ des Wiederstands 80 vernachlässigbar ist, sodass der Eingangswiderstand der über den Anschluss 71 an dem Elektro-Akustik-Wandler 40 elektrisch gekoppelten Auswerteeinheit 70 für kleine Nutzspannungen vorwiegend durch den Widerstandswert Rᵢ des Widerstands 80 bestimmt wird. Je nach Schaltungsauslegung des Verstärkers 60 wird der Widerstandswert Rᵢ des an dem Eingang 61 des Verstärkers 60 elektrisch gekoppelten Wiederstands 80 auch von der Verstärkerschaltung bestimmt. Eine Schutzbeschaltung 90 verhindert die Zerstörung des Verstärkers 60 beim Senden und bei hohen Echoamplituden.

In einigen Fällen enthält der Akustik-Elektro-Wandler 40 Schaltungsanteile (nicht dargestellt) zur Anpassung des Wandlers 40 an die Verstärkerimpedanz und/oder an den Sendeimpulsgenerator 20 und/oder an bestimmte klimatische Einflüsse, wie Feuchtigkeit und/oder Arbeitstemperatur.

Objekte in besonders geringen Abständen von beispielsweise unter 10 cm können mit dieser bekannten Architektur nicht gemessen werden, da die Akustik-Elektro-Wandler 40 für solche Objekte eine Amplitude von 1 V und höher generiert. Um Objekte in besonders geringen Abständen messen zu können, reicht der Dynamikbereich heute üblicher Verstärker nicht aus.

Aus dem Dokument JP 2001221851 A ist eine Ultraschallsensorvorrichtung bekannt, bei der im Empfangspfad ein Verstärker mittels eines Transistors für eine bestimmte Zeit geerdet wird, um das Ausschwingen des Ultraschallwandlers nach dem Senden von Ultraschallpulsen und vor dem Empfangen eines an einem Objekt der Umgebung reflektierten Ultraschallpulses zu dämpfen.

In dem Dokument DE 199 19 227 A1 ist beschrieben, wie eine flexible Ansteuerung für einen Kraftfahrzeug-Nahbereichspulsradar durchzuführen ist, bei der unter anderem eine variable Dämpfung des Empfangssignals in Abhängigkeit von der Vorgabe des zu betrachtenden Entfernungsfenster sowie der wahrscheinlichen Reflexionsintensität des zu erwartenden Zielobjekts vorgegeben ist. In demselben Dokument ist weiterhin beschrieben, dass die variable Dämpfung des Empfangssignals erfolgt, um eine Arbeitspunkteinstellung der nachfolgenden Auswerteschaltung zu erreichen. Nachteilig dabei ist, dass die Empfangssignale, die aus Reflektionen von Objekten stammen, die sich nicht in dem vorgegebenen Entfernungsfenster befinden und/oder nicht die vorgegebene Reflexionsintensität aufweisen, ungeeignet gedämpft werden, was zu einer erheblichen Reduzierung der Detektionswahrscheinlichkeit solcher Objekten führen kann.

In dem Dokument WO 2010/076061 A1 ist eine Verstärkung des Echosignals mit einer Laufzeit des Echosignals abhängigen Verstärkungsfaktor beschrieben. In demselben Dokument ist weiterhin beschrieben, dass zusätzlich, wenn die Dynamik der laufzeitabhängigen Verstärkung nicht genügt, um sowohl Kleinsignale als auch Großsignale auf die Übertragungsstärke zu komprimieren, eine Amplitudenkompression des Echosignals erfolgen kann, um Signalstärken, die für eine weitere Übertragung zu groß sind, stattfinden kann. Aufwendig dabei ist, dass, wenn eine Amplitudenkompression durchgeführt werden muss, eine Bestimmung der Signalstärke der Echosignale notwendig ist, damit nur die Echosignale komprimiert werden können, die für eine weitere Übertragung zu groß sind.

Ferner beschreibt das Dokument US 5,231,608 A eine Objekterfassungsvorrichtung mit einem Sender zum Aussenden von Ultraschallpulsen und einem Empfänger zum Empfangen von ausgesendeten und an einem Objekt reflektierten Ultraschallpulsen, die hier als Echopulse bezeichnet werden. Die Objekterfassungsvorrichtung umfasst eine Bedämpfungsvorrichtung zum Bedämpfen der von dem Empfänger aus den empfangenen Echopulsen erzeugten elektrischen Signale. Dabei ist die Bedämpfungsvorrichtung dazu ausgebildet, eine sich mit der nach dem Senden der Ultraschallpulse abgelaufenen Zeit sich verringernden Bedämpfung mittels einer geeigneten Veränderung eines Widerstandswertes einer in der Bedämpfungsvorrichtung angeordneten Widerstandsschaltung zu erzeugen. Die Widerstandsschaltung umfasst mehrere mittels Schaltern umschaltbare Widerstände, und die Veränderung des Widerstandswertes der Widerstandsschaltung erfolgt mittels eines von einer nach dem Senden der Ultraschallpulse abgelaufenen Zeit abhängigen Umschaltens der mehreren Widerstände.

Weiterhin ist aus dem Dokument US 3,742,438 A eine Objekterfassungsvorrichtung zum Erfassen von Objekten mittels ausgesendeter und an Objekten reflektierter akustischer Pulse bekannt. Die an den Objekten reflektierten akustischen Pulse werden hier auch als Echopulse bezeichnet. Die Objekterfassungsvorrichtung umfasst dabei zwei Übertragungswege zum Übertragen von aus Echopulsen erzeugten elektrischen Signalen. Die zwei Übertragungswege können mittels Schaltern hintereinander mit einer Anzeigevorrichtung verbunden werden. Ferner umfassen die zwei Übertragungswege jeweils einen Verstärker zum Verstärken eines zu übertragenden elektrischen Signals mit einer jeweils anderen mit der Zeit zunehmenden Verstärkung. Ein erster der Übertragungswege wird mit dem Senden der akustischen Pulse mit der Anzeigevorrichtung verbunden. Ferner ist der Verstärker eines zweiten der zwei Übertragungswege mit einem Schwellenwertdetektor verbunden. Bei Vorliegen eines mittels des Verstärkers des zweiten Übertragungsweges verstärkten und aus einem Echopuls erzeugten elektrischen Signals, das einen vordefinierten Schwellenwert überschreitet, wird der zweite Übertragungsweg mit der Anzeigevorrichtung verbunden.

Auch ist aus den Dokumenten US 4,464,738 A, GB 1 257 520 A, GB 2 161 932 A und US 3 624 596 A eine Objekterfassungsvorrichtung zum Erfassen von Objekten mittels ausgesendeter und an Objekten reflektierter akustischer Pulse bekannt. Die an den Objekten reflektierten akustischen Pulse werden hier auch als Echopulse bezeichnet. Die Objekterfassungsvorrichtung umfasst dabei eine Bedämpfungsvorrichtung, die zum Bedämpfen von aus den Echopulsen erzeugten elektrischen Signalen mittels einer sich mit der Zeit verringernden Bedämpfung ausgebildet ist.

### Offenbarung der Erfindung

Erfindungsgemäß werden eine Umfelderfassungsvorrichtung zur Bestimmung der Position und/oder der Bewegung von mindestens einem Objekt in der Umgebung eines Bewegungshilfsmittels mittels mindestens eines ausgesendeten und an dem Objekt reflektierten akustischen Pulses und ein entsprechendes Verfahren gemäß den unabhängigen Ansprüchen 1 und 3 bereitgestellt. Die Unteransprüche zeigen bevorzugte Weiterbildungen der Erfindung.

Die erfindungsgemäße Umfelderfassungsvorrichtung zur Bestimmung der Position und/oder der Bewegung von mindestens einem Objekt in der Umgebung eines Bewegungshilfsmittels mittels mindestens eines ausgesendeten und an dem Objekt reflektierten akustischen Pulse umfasst einen Elektro-Akustik-Wandler zum Empfangen des mindestens einen an dem Objekt reflektierten und als Echopuls bezeichneten akustischen Pulses im Empfangspfad und eine Auswerteeinheit zum Auswerten des Signals des Akustik-Elektro-Wandlers. Dabei ist die Umfelderfassungsvorrichtung dazu ausgebildet, das Signal des im Empfangspfad vorhandenen Akustik-Elektrowandlers mittels einer in einer Eingangsstufe der Auswerteeinheit enthaltenen Bedämpfungsvorrichtung zumindest während der Empfangszeit des Echopulses zu bedämpfen. Weiterhin umfasst die Umfelderfassungsvorrichtung eine Zeitsteuerung, die dazu ausgebildet ist, die Bedämpfungsvorrichtung derart zu steuern, dass eine Verringerung der Bedämpfung des Signals des Elektro-Akustik-Wandlers zumindest während der Empfangszeit des Echopulses auftritt.

Das erfindungsgemäße Verfahren zur Bestimmung der Position und/oder der Bewegung von mindestens einem Objekt in der Umgebung eines Bewegungshilfsmittels mittels mindestens eines ausgesendeten und an dem Objekt reflektierten akustischen Pulses wird mittels einer erfindungsgemäßen Umfelderfassungsvorrichtung durchgeführt. Dabei wird das Signal eines in dem Empfangspfad der Umfelderfassungsvorrichtung vorhandenen Akustik-Elektrowandlers zumindest während der Empfangszeit des an dem Objekt reflektierten und als Echopuls bezeichneten akustischen Pulses schaltungstechnisch mittels einer in einer Eingangsstufe einer Auswerteeinheit zum Auswerten des Signals des Akustik-Elektro-Wandlers enthaltenen Bedämpfungsvorrichtung zumindest während der Empfangszeit zeitabnehmend bedämpft.

Die erfindungsgemäße Umfelderfassungsvorrichtung ist dazu ausgebildet, die Position und/oder die Bewegung von Objekten in der Umgebung von Bewegungshilfsmitteln wie Krankenfahrstühle, Segways, Fahrräder, Elektroautos, andere Fahrzeuge wie Autos, Busse und Lastkraftwagen mittels ausgesendeter pulsförmig modulierter akustischer Signale mit eine Pulsdauer von insbesondere 0,3 ms zu bestimmen. Mittels der erfindungsgemäßen Umfelderfassungsvorrichtung wird das Signal des Akustik-Elektro-Wandlers mit Beginn des Echozyklus, insbesondere spätestens unmittelbar nach dem Ende der Schallimpulsaussendung oder sogar etwas davor, schaltungstechnisch mit einer Bedämpfung bedämpft, die während des Echozyklus verringert wird.

Mittels der Bedämpfung des Signals des Elektro-Akustik-Wandlers während der Empfangszeit der Echopulse wird erreicht, dass auch Objekte im Nahfeld anhand ihrer starken Echos detektiert werden können.

Erfindungsgemäß wurde erkannt, dass zu einem bestimmten Zeitpunkt eines Echozyklus stets nur ein Bruchteil des gesamten Dynamikbereichs des Empfangssignals auftreten kann. Durch die mit Zeit abnehmende Bedämpfung der Signale des Elektro-Akustik-Wandlers kann der Dynamikumfang einer nachfolgenden Signalauswertung insbesondere während und unmittelbar nach dem Aussenden der auszusendenden Pulse vergrößert werden. Dadurch können mittels der erfindungsgemäßen Umfelderfassungsvorrichtung sowohl Klein- als auch Großsignale aufwandsarm ausgewertet werden. Dadurch kann bei der akustischen Umfeldüberwachung mittels der erfindungsgemäßen Umfelderfassungsvorrichtung insbesondere eine störungsarme Unterscheidung der auftretenden Signalstärken sowie eine störungsarme Dopplerverschiebungsdetektion realisiert werden.

Bei einer besonders vorteilhaften Ausführungsform der Erfindung umfasst die Bedämpfungsvorrichtung mehrere mittels mindestens eines Schalters elektrisch koppelbare Bauelementen und die Zeitsteuerung ist dazu ausgebildet, die mehreren Bauelemente derart umzuschalten, dass die gewünschte Bedämpfung des Signals des Elektro- Akustik-Wandlers erfolgt, wobei die Umfelderfassungsvorrichtung vorzugsweise weiter dazu ausgebildet ist, die Schaltzeitpunkte und/oder die technischen Folgen des Umschaltens bei der Auswertung des Signals des Elektro-Akustik-Wandlers zu berücksichtigen.

Mit anderen Worten, die Bedämpfung des Signals des Elektro-Akustik-Wandlers wird erfindungsgemäß in einfacher Weise durch Schaltvorgänge verändert. Insbesondere sind die Schaltzeitpunkte und optional die technischen Folgen des Umschaltens, wie zum Beispiel Einschwingvorgänge (Umschwingvorgänge) der nachfolgenden Auswerteeinheit bekannt und werden von ihr bei der Auswertung berücksichtigt.

Bei einer besonders bevorzugten Ausführungsform der Erfindung umfasst die Bedämpfungsvorrichtung eine erste Bedämpfungsschaltung, die an einem ersten Anschluss mit dem Elektro-Akustik-Wandler und an einem zweiten Anschlusses mit einem Eingang eines nachfolgenden, in der Eingangsstufe einer nachfolgenden Auswerteeinheit enthaltenen Verstärkers elektrisch gekoppelt ist. Dabei umfasst die erste Bedämpfungsschaltung einen zwischen ihren Anschlüssen geschalteten Widerstand mit verstellbarem Widerstandswert und/oder mehrere zwischen ihren Anschlüssen mittels mindestens eines Schalters jeweils elektrisch koppelbare Widerstände mit unterschiedlichen Widerstandswerten. Erfindungsgemäß ist die Zeitsteuerung dazu ausgebildet, einen derartigen Widerstandswertverlauf des verstellbaren Widerstandes zu erzeugen und/oder die mehreren Widerstände derart umzuschalten, dass die Bedämpfung des Signals des Akustik-Elektro-Wandlers wie gewünscht erfolgt.

Bei einer weiteren bevorzugten Ausführungsform der Erfindung umfasst die Bedämpfungsvorrichtung eine zweite Bedämpfungsschaltung, die an einem ersten Anschluss mit dem Elektro-Akustik-Wandler, an einem zweiten Anschluss mit dem Eingang des nachfolgenden, in der Eingangsstufe der Auswerteeinheit enthaltenen Verstärkers und an mindestens einem dritten Anschluss mit einem Punkt mit festem Bezugspotential elektrisch gekoppelt ist. Dabei umfasst die zweite Bedämpfungsschaltung einen verstellbaren Widerstand und/oder mehrere mittels mindestens eines Schalters elektrisch koppelbare Widerstände, wobei der verstellbare Widerstand und/oder die mehreren Widerstände an einem ersten Ende mit dem ersten und dem zweiten Anschluss der zweiten Bedämpfungsschaltung jeweils elektrisch gekoppelt sind und an einem zweiten Ende mit einem dritten Anschluss der zweiten Bedämpfungsschaltung elektrisch gekoppelt oder mittels des mindestens eines Schalters jeweils koppelbar sind. Erfindungsgemäß ist die Zeitsteuerung dazu ausgebildet, einen derartigen Widerstandswertverlauf des verstellbaren Widerstandes zu erzeugen und/oder die mehreren Widerstände derart umzuschalten, dass die Bedämpfung des Signals des Elektro-Akustik-Wandlers wie gewünscht erfolgt.

Die Verwendung der erfindungsgemäßen Bedämpfungsschaltungen mit mehreren schaltbaren Widerständen mit unterschiedlichen Widerstandswerten, mittels denen eine nicht kontinuierliche Bedämpfung durch das Umschalten der mehreren Widerstandswerte realisiert wird, stellt eine vereinfachte, dadurch auch kostengünstige und durch die Berücksichtigung der Folgen des plötzlichen Umschaltens bei der Signalauswertung auch sehr zuverlässige Lösung dar.

Weiterhin führt die Verwendung der erfindungsgemäßen Bedämpfungsschaltungen mit Widerständen, die jeweils einseitig an einem Punkt mit festem Bezugspotential verbunden sind, zu einer starken Vereinfachung der technischen Realisierung solcher Bedämpfungsvorrichtungen.

Erfindungsgemäß umfasst die erfindungsgemäße Bedämpfungsvorrichtung mehrere in dem Empfangspfad enthaltene Übertragungswege mit unterschiedlichen Signalbedämpfungen, die jeweils eine Eingangsstufe der Auswerteinheit bilden, wobei die genanten Eingangsstufen der Auswerteeinheit insbesondere jeweils eine Eingangsverstärkungsstufe umfassen. Dabei ist die erfindungsgemäße Umfelderfassungsvorrichtung dazu ausgebildet, das Signal des Elektro-Akustik-Wandlers während unterschiedlicher Zeiträume über unterschiedliche Übertragungswege mit unterschiedlichen Bedämpfungen zu übertragen und dadurch zu bedämpfen.
Mit anderen Worten erfolgt die Bedämpfung erfindungsgemäß dadurch, dass der Empfangspfad zumindest stückweise mehrere Übertragungswege mit unterschiedlicher Bedämpfung enthält.
Insbesondere in hochempfindlichen Verstärkerschaltungen kann das Vorhandensein von Schaltern in den Eingangsstufen, das bei der Erfindung dem Vorhandensein der Schalter in den Bedämpfungsschaltungen entspricht, nicht beseitigbare Störungen verursachen. Durch die Verwendung mehrerer Eingangsverstärkerstufen kann dieser Effekt unterdrückt werden.
Bei einer besonders bevorzugten Ausführungsform der Erfindung ist die Umfelderfassungsvorrichtung dazu ausgebildet, das Zeitverhalten und/oder die Amplitude des mittels der Bedämpfungsvorrichtung bedämpften Signals des Elektro-Akustik-Wandlers zu bestimmen und insbesondere das Signal des Akustik-Elektro-Wandlers auch vor dem Beginn des Empfanges des Echopulses, vorzugsweise vor und/oder nach dem Ende des Sendens eines mittels des Elektro-Akustik-Wandlers erzeugten akustischen Pulses zu bedämpfen.
Mit anderen Worten wird das Signal des Elektro-Akustik-Wandlers mittels der erfindungemäßen Umfelderfassungsvorrichtung insbesondere bezüglich seines Zeitverhaltens untersucht, wie zum Beispiel mittels der Bestimmung der Periodendauer anhand von Nulldurchgängen und/oder mittels der Bestimmung der zu den Periodendauern äquivalenten Signalfrequenz und/oder mittels der Bestimmung der Amplituden.

Mittels der Bedämpfung des Signals des Akustik-Elektro-Wandlers während des Sendens und/oder unmittelbar nach dem Senden können die elektrische Signalverläufe insbesondere während des Sendens, d.h. bei Amplituden von über 100 V, zur Erkennung der Resonanzeigenschaften, Bandbreiten, Wirkungsgrad, Eigenüberwachung, usw. bezüglich ihres Amplitudenverlaufs beobachtet und ausgewertet werden.

Erfindungsgemäß wird weiterhin ein Fahrzeug mit einer erfindungsgemäßen Umfelderfassungsvorrichtung bereitgestellt.

### Kurze Beschreibung der Zeichnungen

Nachfolgend werden Ausführungsbeispiele der Erfindung unter Bezugnahme auf die begleitenden Zeichnungen im Detail beschrieben. In der Zeichnungen ist:
- Figur 1: ein schematisches Blockschaltbild eines Ultraschallsensors nach dem Stand der Technik,
- Figur 2a: ein schematisches Blockschaltbild der Eingangstufe einer Auswerteeinheit eines Ultraschallsensors mit einer erfindungsgemäßen Bedämpfungsvorrichtung nach einer ersten Ausführungsform der Erfindung,
- Figur 2b: ein Zeitverlauf der in logarithmischen Skalierung dargestellten Widerstandswertänderung eines verstellbaren Widerstandes der Bedämpfungsvorrichtung nach der ersten Ausführungsform der Erfindung,
- Figur 3a: ein schematisches Blockschaltbild der Eingangstufe einer Auswerteeinheit eines Ultraschallsensors mit einer erfindungsgemäßen Bedämpfungsvorrichtung nach einer zweiten Ausführungsform der Erfindung,
- Figur 3b: ein Zeitverlauf der in logarithmischen Skalierung dargestellten Widerstandswertänderung eines verstellbaren Widerstandes der Bedämpfungsvorrichtung nach der zweiten Ausführungsform der Erfindung,
- Figur 4: ein schematisches Blockschaltbild der Eingangstufe einer Auswerteeinheit eines Ultraschallsensors mit einer erfindungsgemäßen Bedämpfungsvorrichtung nach einer dritten Ausführungsform der Erfindung,
- Figuren 5a, 5b: zwei schematische Blockschaltbilder der Eingangstufe einer Auswerteeinheit eines Ultraschallsensors mit einer erfindungsgemäßen Bedämpfungsvorrichtung nach einer vierten Ausführungsform der Erfindung,
- Figur 6: ein schematisches Blockschaltbild einer erfindungsgemäßen Bedämpfungsvorrichtung nach einer fünften Ausführungsform der Erfindung, wobei die Bedämpfungsvorrichtung mehrere Übertragungswege mit unterschiedlichen Bedämpfungen umfasst, und
- Figur 7: ein schematisches Blockschaltbild einer erfindungsgemäßen Bedämpfungsvorrichtung nach einer sechsten Ausführungsform der Erfindung, wobei die Bedämpfungsvorrichtung mehrere Übertragungswege mit unterschiedlichen Bedämpfungen umfasst.

In der Figur 2a ist ein schematisches Blockschaltbild einer erfindungsgemäßen Bedämpfungsvorrichtung 101 nach einer ersten Ausführungsform der Erfindung gezeigt, wobei ein Prinzipschema des Reihenwiderstands der Eingangstufe 72 einer Auswerteeinheit 70 eines erfindungsgemäßen Ultraschallsensors dargestellt ist.

Die Bedämpfungsvorrichtung 101 nach der ersten Ausführungsform der Erfindung umfasst eine erste Bedämpfungsschaltung 102, die an einem ersten Anschluss (nicht dargestellt) mit einem Ausgang 71 des Elektro-Akustik-Wandlers (nicht dargestellt) insbesondere über den Koppelkondensator 50 und an einem zweiten Anschlusses (nicht dargestellt) mit einem Eingang 61 eines nachfolgenden, in der Auswerteeinheit 70 enthaltenen und insbesondere eine übliche Schutzschaltung 90 umfassenden Verstärkers 60 elektrisch gekoppelt ist, wobei die erste Bedämpfungsschaltung 102 einen zwischen ihren Anschlüssen (nicht dargestellt) geschalteten Widerstand 110 mit verstellbarem Widerstandswert umfasst. Die Eingangsstufe 72 umfasst ferner die Zeitsteuerung 100, die dazu ausgebildet ist, einen derartigen Widerstandswertverlauf des verstellbaren Widerstandes 110 zu erzeugen, dass die Bedämpfung des Signals des Elektro-Akustik-Wandlers zumindest während des Echozyklus zeitabnehmend erfolgt.

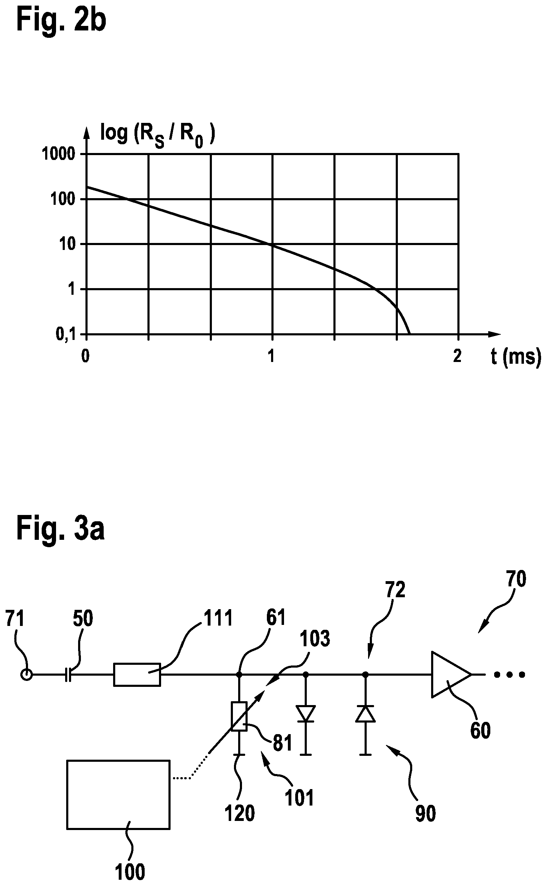

Bei der in der Figur 2a dargestellten Lösung ist der verstellbare Wiederstand 110 zu Beginn des Echozyklus, d.h. während des Aussendens des Sendepulses mittels des Elektro-Akustik-Wandlers, bevorzugt hochohmig einzustellen, sodass während des Sendens am Verstärkerinnenwiderstand 80 mit dem zwischen dem Eingang 61 des Verstärkers 60 und einem Punkt mit festem Bezugspotential 120 geschalteten Widerstandswert Rᵢ nur eine vernachlässigbare Spannung im Verhältnis zu der an den Elektro-Akustik-Wandler anliegenden Spannung abfällt. Nach Ende des Sendens ist der verstellbare Widerstand 110 durch die Zeitsteuerung 100 in Abhängigkeit vom Sendeschema zu verringern. Dies sollte bevorzugt so wie in der Figur 2b dargestellt ist erfolgen.

In der Figur 2b ist eine mögliche Änderung des Logarithmus des Quotienten zwischen dem Widerstandswert Rₛ des "Reihenwiderstandes" 110 und einem Widerstandswert R₀ eines Referenzwiderstandes von beispielsweise 1 Ω, der mit log(Rₛ/R₀) kennzeichnet wird, in Abhängigkeit der insbesondere in Millisekunden gemessenen Zeit t dargestellt.

Nachteilig bei der in Figur 2a dargestellten Lösung ist, dass der verstellbare Widerstand 110 an keinem Ende einen festen Bezug zur Spannungsversorgung beziehungsweise Masse hat, was dessen Realisierung erschwert. Dieser Nachteil wird bei der in der Figur 3a dargestellten Bedämpfungsvorrichtung 101 nach der zweiten Ausführungsform der Erfindung überwunden.

In der Figur 3a ist ein schematisches Blockschaltbild der Eingangstufe 72 einer Auswerteeinheit 70 eines erfindungsgemäßen Ultraschallsensors (nicht dargestellt) mit einer erfindungsgemäßen Bedämpfungsvorrichtung 101 nach einer zweiten Ausführungsform der Erfindung gezeigt, wobei das Prinzipschema Parallelwiderstand der Eingangsstufe 72 der Auswerteeinheit 70 eines Ultraschallsensors dargestellt ist.

Die Bedämpfungsvorrichtung 101 nach der zweiten Ausführungsform der Erfindung umfasst eine zweite Bedämpfungsschaltung 103, die an einem ersten Anschluss (nicht dargestellt) über den Koppelkondensator 50 und einen Widerstand 111 mit festem Widerstandswert R mit dem Ausgang 71 des Elektro-Akustik-Wandlers (nicht kennzeichnet), an einem zweiten Anschluss (nicht gekennzeichnet) mit einem Eingang 61 des nachfolgenden, in der Eingangsstufe 72 der Auswerteeinheit 70 enthaltenen Verstärkers 60 und an mindestens einem dritten Anschluss (nicht kennzeichnet) mit einem Punkt mit festem Bezugspotential 120 elektrisch gekoppelt ist, wobei die zweite Bedämpfungsschaltung 103 einen verstellbaren Widerstand 81 umfasst. Dabei ist der verstellbare Widerstand 81 an einem ersten Ende (nicht gekennzeichnet) mit dem ersten und dem zweiten Anschluss der zweiten Bedämpfungsschaltung 103 und an einem zweiten Ende mit dem dritten, an dem Punkt 120 mit einem festen Bezugspotential verbundenen Anschluss der zweiten Bedämpfungsschaltung 103 elektrisch gekoppelt. Dabei ist die Zeitsteuerung 100 dazu ausgebildet, einen derartigen Widerstandswertverlauf des verstellbaren Widerstandes 81 zu erzeugen, dass das Signals des Elektro- Akustik-Wandlers zeitabnehmend bedämpft wird.

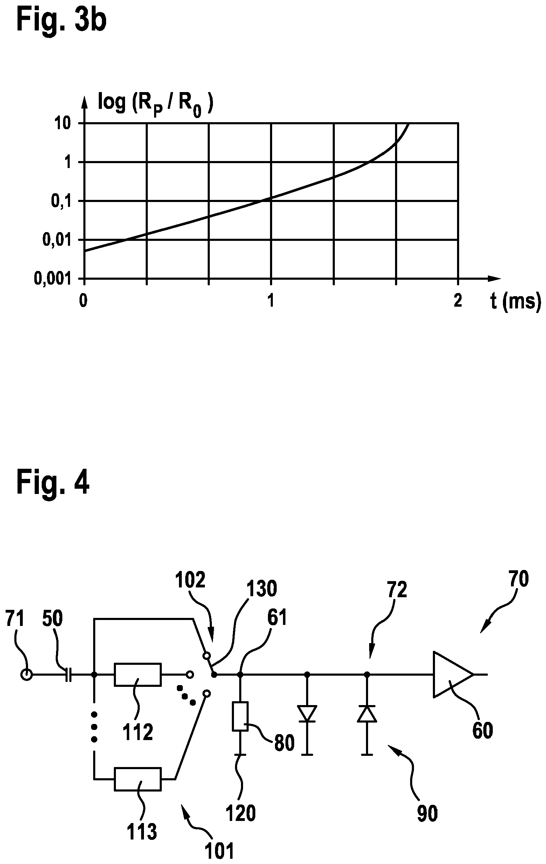

Um die hohen Signale während des Sendens beziehungsweise zu Beginn des Echozyklus, d.h. unmittelbar nach dem Senden den nachfolgenden Empfangsstufen (nicht dargestellt) der Auswerteinheit 70 nur stark bedämpft zur Verfügung zu stellen, muss der in der Figur 3a dargestellte verstellbare Widerstand 81 anfangs sehr niedrig sein. Bevorzugt sollte der verstellbare Widerstand 81 ein Zeitverhalten, wie in der Figur 3b dargestellt, aufweisen.

In der Figur 3b ist eine mögliche Änderung des Logarithmus des Quotienten zwischen dem Widerstandswert Rₚ des "Parallelwiderstandes" 81 und einem Widerstandswert R₀ eines Referenzwiderstandes von beispielsweise 1 Ω, der mit log(Rₚ/R₀) kennzeichnet wird, in Abhängigkeit der insbesondere in Millisekunden gemessenen Zeit t dargestellt.

Dem Fachmann ist bekannt, dass der "Reihenwiderstand" 110 und der "Parallelwiderstand" 81 durch die Zeitsteuerung 100 gleichzeitig verändert werden können. Diese Lösung ist hier nicht gesondert dargestellt.

Sowohl schaltungstechnisch als auch vom Zeitverhalten her sind die in den Figuren 2b und 3b dargestellten Widerstandswertsverläufe nicht einfach realisierbar. Eine vereinfachte Lösung wird durch das Umschalten von Widerstandswerten und die Berücksichtigung der nichtkontinuierlichen Bedämpfung sowie der technischen Folgen des plötzlichen Umschaltens bei der Signalauswertung erreicht.

In der Figur 4 ist ein schematisches Blockschaltbild der Eingangstufe 72 einer Auswerteeinheit 70 eines erfindungsgemäßen Ultraschallsensors (nicht kennzeichnet) mit einer erfindungsgemäßen Bedämpfungsvorrichtung 101 nach einer dritten Ausführungsform der Erfindung dargestellt, wobei das Prinzip des "Reihenwiderstandes" der Eingangsstufe 72 des erfindungsgemäßen Ultraschallsensors dargestellt wird, bei dem die gewünschte Bedämpfung durch Umschalten von mehreren Widerständen 112, 113 erfolgt.

Die in der Figur 4 dargestellte Bedämpfungsvorrichtung 101 umfasst eine erste Bedämpfungsschaltung 102, die an einem ersten Anschlusses (nicht dargestellt) mit dem Ausgang 71 des Elektro-Akustik-Wandler bevorzugt über den Koppelkondensator 50 und an einem zweiten Anschlusses (nicht dargestellt) mit dem Eingang 61 des nachfolgenden, insbesondere die Schutzschaltung 90 aufweisenden und in der Auswerteeinheit 70 enthaltenen Verstärkers 60 elektrisch gekoppelt ist, wobei die erste Bedämpfungsschaltung 102 mehrere zwischen ihren Anschlüssen mittels mindestens eines Schalters 130 jeweils elektrisch koppelbare Widerstände 112, 113 umfasst. Zwischen dem Eingang 61 und einem Punkt 120 mit festem Bezugspotential ist ein Widerstand 80 mit einem Widerstandswert Rᵢ geschaltet. Die Zeitsteuerung 100 ist dazu ausgebildet, die mehreren Widerstände 112, 113 derart umzuschalten, dass die Bedämpfung des Signals des Elektro-Akustik-Wandlers wie gewünscht erfolgt.

Bei der in Figur 4 dargestellten Lösung ist ein solcher Auswahlschalter 130 eingesetzt, der genau eine Verbindung von mehreren verfügbaren Verbindungen herstellt. Dem Fachmann ist bekannt, dass eine diesem Auswahlverfahren äquivalente Eigenschaft mit mehreren Schaltern erreicht werden kann, die Widerstände einander parallel schalten und/oder die in Reihe geschaltete Widerstände überbrücken.

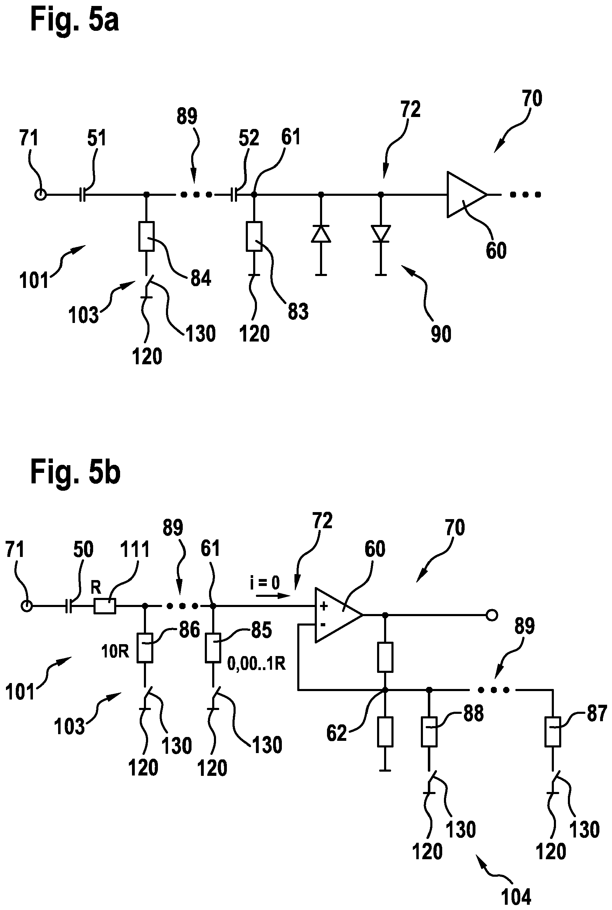

Die Figuren 5a und 5b zeigen zwei schematische Blockschaltbilder der Eingangstufe 72 einer Auswerteeinheit 70 eines Ultraschallsensors mit einer erfindungsgemäßen Bedämpfungsvorrichtung 101 nach einer vierten Ausführungsform der Erfindung.

Die in der Figur 5a gezeigte Lösung konkretisiert das in der Figur 3a dargestellte Prinzipschema "Parallelwiderstand" der Eingangsstufe 72 einer Auswerteinheit 70. Bei der in der Figur 5a dargestellten Lösung werden Spannungsteiler mittels Parallelwiderständen 83, 84 durch die Zeitsteuerung 100 geschaltet.

Dabei umfassen die in der Figuren 5a und 5b dargestellten Bedämpfungsvorrichtungen 101 jeweils eine zweite Bedämpfungsschaltung 103, die an einem ersten Anschluss (nicht dargestellt) mit einem Ausgang 71 des Elektro-Akustik-Wandlers (nicht dargestellt), an einem zweiten Anschluss (nicht dargestellt) mit einem Eingang 61 des nachfolgenden, in der Eingangsstufe 72 der Auswerteeinheit 70 enthaltenen, insbesondere eine Schutzvorrichtung 90 umfassenden Verstärkers 60 und an mindestens einem dritten Anschluss (nicht dargestellt) mit einem Punkt 120 mit festem Bezugspotential elektrisch gekoppelt ist.

Dabei umfassen die zweiten, in den Figuren 5a und 5b jeweils dargestellten Bedämpfungsschaltungen 103, jeweils mehrere mittels mindestens eines Schalters 130 elektrisch koppelbare Widerstände 83, 84, 85, 86, wobei die mehreren Widerstände 83, 84, 85, 86 an einem ersten Ende mit dem ersten und dem zweiten Anschluss der zweiten Bedämpfungsschaltung 103 jeweils gekoppelt sind und an einem zweiten Ende mittels des mindestens einen Schalters 130 mit dem dritten Anschluss der zweiten Bedämpfungsschaltung 103 jeweils koppelbar sind. Dabei ist die Zeitsteuerung 100 (nicht dargestellt) dazu ausgebildet, die mehreren Widerstände 83, 84, 85, 86 derart zu schalten, dass die Bedämpfung des Signals des Akustik-Elektro-Wandlers wie gewünscht erfolgt.

Die waagerechten Dreifachpunkte 89 deuten auf die Möglichkeit hin, dass in den Eingangsstufen 72 der Auswerteeinheiten 70 jeweils zusätzliche Bedämpfungsschaltungen enthalten sein können.

Bei der zweiten, in der Figur 5a dargestellten Bedämpfungsschaltung 103 ist der erste schaltbare Widerstand 83 mit einem Widerstandwert R₁ an seinem ersten Ende mit dem Eingang 61 des Verstärkers 60 und an seinem zweiten Ende insbesondere mittels eines Schalters (nicht dargestellt) mit dem Punkt 120 mit festem Bezugspotential verbunden. Der erste schaltbare Widerstand 83 ist an seinem ersten Ende mittels eines ersten Kondensators 52 mit einer Kapazität C₁ insbesondere mit dem ersten Ende des letzten Widerstands 84 mit einem Widerstandswert R_{N} verbunden. Der letztere Widerstand 84 ist an seinem ersten Ende insbesondere mittels eines letzteren Kondensators 51 mit einer Kapazität C_{N} mit dem Ausgang 71 des Elektro-Akustik-Wandlers verbunden und an seinem zweiten Ende mittels eines Schalters 130 mit dem Punkt 120 mit festem Bezugspotential elektrisch koppelbar.

Dem Fachmann ist bekannt, dass auf die Verwendung der Kondensatoren 51, 52 unter günstigen Randbedingungen auch verzichtet werden kann. Dies ist nicht gesondert dargestellt.

Dem Fachmann ist auch bekannt, dass mittels eines Auswahlschalters, der eine von mehreren verfügbaren Verbindungen herstellt, bei der in Figur 5a gezeigten Lösung ebenso äquivalente Eigenschaften erreicht werden können, wie auch mit in Reihe geschalteten Widerständen, die mittels mehrerer Schalter einzeln überbrückt werden können. Daher sind diese Lösungen nicht in einer gesonderten Figur dargestellt.

Figur 5b konkretisiert die in der Figur 5a dargestellte Lösung und zeigt eine Ausführungsform des in der Figur 3a dargestellten Prinzipschemas "Parallelwiderstand" der Eingangsstufe 72 einer Auswerteinheit 70 eines erfindungsgemäßen Ultraschallsensors (nicht gekennzeichnet) als geschaltete Widerstände 85, 86 sowie als Verstärker 60 mit geschalteter Verstärkung, wobei diese Ausführungsform wahlweise zur Kompensation und/oder zur Ergänzung der Verstärkungsumschaltung verwendet werden kann.

Bei der zweiten, in der Figur 5b dargestellten Bedämpfungsschaltung 103 ist der letztere Widerstand 86 an seinem ersten Ende mittels eines Widerstands 111 mit einem Widerstandswert R und eines Koppelkondensators 50 mit dem Ausgang 71 des Elektro-Akustik-Wandlers (nicht dargestellt) verbunden und an seinem zweiten Ende mit dem Punkt 120 mit festem Bezugspotential mittels eines Schalters 130 elektrisch koppelbar. Der letztere schaltbare Widerstand 86 mit einem Widerstandswert von beispielsweise 10*R ist an seinem ersten Ende insbesondere mit dem ersten Ende des ersten schaltbaren Widerstands 87 mit einem Widerstandswert von beispielsweise 0,001*R oder kleiner verbunden. Der erste schaltbare Widerstand 87 ist an seinem ersten Ende auch mit dem Eingang 61 des Verstärkers 60 verbunden und an seinem zweiten Ende mit dem Punkt 120 mit festem Bezugspotential mittels eines Schalters 130 elektrisch koppelbar. Dabei können die Widerstandswerte der Widerstände 85 beziehungsweise 86 derart ausgewählt werden, dass die Signalstärke am positiven Eingang 61 des Verstärkers 60 sehr niedrig im Verhältnis zu der am Ausgang 71 des Elektro-Akustik-Wandlers (nicht dargestellt) anliegenden Signalstärke ist.

In der Figur 5b wird gezeigt, wie der Operationsverstärker 60 in nichtinvertierender Form durch ein eingangsseitiges Netzwerk (zweite Bedämpfungsschaltung) 103 aus schaltbaren Parallelwiderständen 85, 86 erfindungsgemäß bedämpft wird.

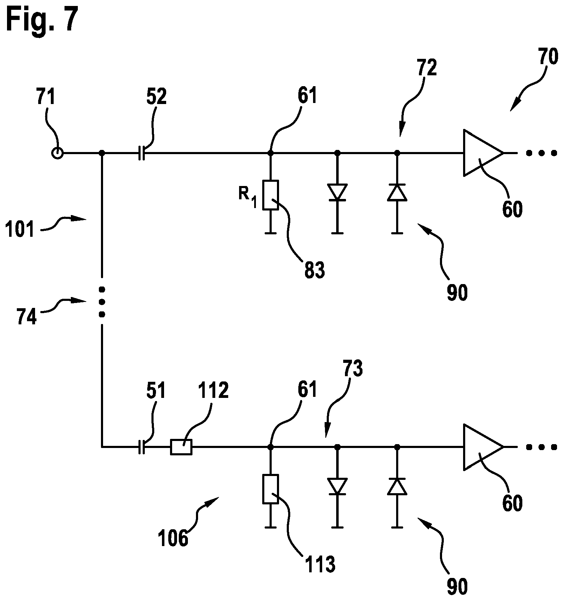

Das an dem negativen Eingang 62 des Operationsverstärkers 60 befindliche Netzwerk 104, die mehrere schaltbare Widerstände 87, 88 umfasst, wurde bereits in der Figur 7 des Dokuments WO 2010/0760661 A1 beschrieben.
In dem genannten Dokument wurde das Netzwerk 104 zur Erzeugung einer nichtkontinuierlichen, von der Laufzeit des Echosignals abhängigen Verstärkung des Signals des Elektro-Akustik-Wandlers (nicht dargestellt) verwendet.

Figur 5b zeigt insbesondere wie beide Lösungen gut kombinierbar sind. Vorteilhaft an dieser Lösung ist auch, dass die Schalter 130 alle einseitig an einem Punkt 120 mit festem Bezugspotential, wie der Masse beziehungsweise der Versorgungsspannung angeschlossen sind, was die technische Realisierung stark vereinfacht.

Vorteilhaft im Vergleich zu der in der Figur 4 dargestellte Lösung ist auch, dass die in der Figur 5b dargestellten Widerstände 85, 86, 87, 88 der Netzwerke 103, 104 jeweils zueinander parallel geschaltet werden, sodass sie leicht mittels eines binären Parallelworts von einem Digitalrechner (nicht dargestellt) angesteuert werden können und je nach Kombination der zu einem Zeitpunkt parallel geschalteten Widerstände eine Vielzahl von Widerstandswerten mit relativ wenig Hardware realisiert werden kann.

Das bisher dargestellte Konzept ist keine Regelung, sondern eine sehr einfache und daher kostengünstige Zeitsteuerung. Die Dämpfungsumschaltung findet ausschließlich von den Zeitpunkten des Aussendens der Schallimpulse statt. Insbesondere in hochempfindlichen Verstärkerschaltungen kann das Vorhandensein von Schaltern 130 in den Eingangsstufen 72 der Auswerteeinheiten 70 nicht beseitigbare Signalstörungen verursachen. Dies tritt insbesondere bei der Verwendung von Halbleiterbauelementen als Schalter auf. Durch die Verwendung mehreren Eingangsverstärkerstufen kann dieser Effekt unterdrückt werden, indem der Schalter erst nach einer ersten Verstärkung zum Einsatz kommt.

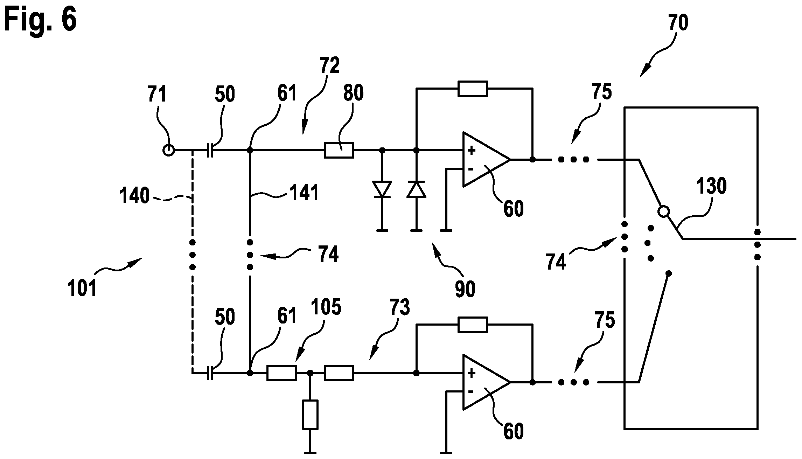

Figur 6 zeigt ein schematisches Blockschaltbild einer erfindungsgemäßen Bedämpfungsvorrichtung 101 nach einer fünften Ausführungsform der Erfindung, wobei die Bedämpfungsvorrichtung 101 mehrere im Empfangspfad umfasste Übertragungswege 72, 73 mit unterschiedlichen Bedämpfungen aufweist.

In der Figur 6 ist eine Ausführungsform des Prinzipschemas "Reihenwiderstand" der Eingangstufe einer Auswerteeinheit 70 eines Ultraschallsensors (nicht gekennzeichnet) als Mehrwegeingangsstufe und speziell als geschaltete Verstärkerausgänge 72, 73 dargestellt. Durch die Verstärkung und durch die optional mit dem Verstärker realisierte Impedanzanpassung des vor dem Schalter liegenden Verstärkers kann der das Signal störende Einfluss eines Schalters, insbesondere eines elektronischen Schalters, verringert werden.

Der obere, in der Figur 6 dargestellte, Verstärkerpfad 72 entspricht dem Stand der Technik. Bei einem invertierenden Verstärkerprinzip resultiert die Eingangsimpedanz aus dem Widerstand 80 mit dem Widerstandswert Rᵢ und dem dazu in Reihe geschalteten vorgelagerten Kondensator 50. Die Schutzschaltung 90 am Operationsverstärkereingang, die zum Teil auch im Operationsverstärker 60 integriert ist, verhindert bei hohen Eingangsspannungen eine Zerstörung des Verstärkers 60. Durch den begrenzten Dynamikbereich des Verstärkers 60 können mit einer Verstärkerstufe 72 jedoch nicht sowohl sehr leise als extrem laute Eingangssignale übertragen werden.

Um extrem laute Eingangssignale mit gleicher Verstärkerarchitektur verarbeiten zu können, ist in der Figur 6 unten ein weiterer Verstärkerpfad 73 dargestellt, bei dem mittels des Widerstandsnetzwerkes 105 die Eingangsspannung erst stark bedämpft wird, bevor sie an den Verstärker 60 gelangt. Wie ebenfalls in unterem Pfad 73 in der Figur 6 dargestellt wird, kann dank der besonders hohen Bedämpfung durch das zusätzliche Eingangsnetzwerk 105 - soweit wirtschaftlich notwendig - auf die Schutzbeschaltung 90 verzichtet werden.

Auf die Möglichkeit der Nutzung weiterer Verstärkerpfade sei durch die Verwendung von senkrechten Dreifachpunkten 74 hingewiesen.

Bei besonders robusten Ausführungen sind die einzelnen Verstärkerpfade 72, 73, wie durch die gestrichelte Linie 140 dargestellt, jeweils mittels eines eigenen Kondensators 50 an einem gemeinsamen Punkt 71 verbunden. Eine materialsparende Alternative zur Verbindung der Verstärkerpfade 72, 73 an einem gemeinsamen Kontaktpunkt 61 stellt die unmittelbar nach dem Kondensator 50 folgende senkrechte durchgezogene Verbindung 141 dar, die bei geeigneter Bauelementedimensionierung gewählt werden kann.

Auf die vielfältigen Möglichkeiten der Signalverarbeitung nach der ersten Verstärkerstufen 72, 73 wie beispielsweise eine weitere Verstärkung und/oder Filterung wird hier nicht eingegangen. Sie werden durch die waagerechte Dreifachpunkte 75 symbolisiert. Erwähnt sei insbesondere die einfache Lösung des mittels mindestens eines Schalters 130 durchgeführten Umschaltens zwischen den verschiedenen Verstärkungspfaden 72, 73, wie sie in der Figur 6 dargestellt sind.

Figur 7 zeigt ein schematisches Blockschaltbild einer erfindungsgemäßen Bedämpfungsvorrichtung 101 nach einer sechsten Ausführungsform der Erfindung, wobei die Bedämpfungsvorrichtung 101 mehrere Übertragungswege 72, 73 mit unterschiedlichen Bedämpfungen umfasst.

In der Figur 7 ist eine Ausführungsform des Prinzipschemas "Parallelwiderstand" der Eingangstufe einer Auswerteeinheit 70 eines Ultraschallsensors (nicht gekennzeichnet) als Mehrwegeingangsstufe dargestellt.

Figur 7 zeigt eine alternative Realisierungsmöglichkeit einer stückweisen Signalbedämpfung. Kleine Eingangsignale gelangen über den Kondensator 52 mit der Kapazität C₁ an den in dem oberen Verstärkerpfad 72 umfassten Verstärker 60, dessen Kleinsignalimpedanz 83 einen Impedanzwert R₁ hat. Überschreiten die Eingangssignale deutlich die Aktivierungsspannung der Schutzbeschaltung 90 des oberen Verstärkerpfades 72, so reduziert sich in diesen Fällen die Eingangsimpedanz der oberen Verstärkerstufe 72 auf den zumeist niederohmig ausgelegten Impedanzwert des Kondensators 52 mit der Kapazität C₁. Dazu parallel geschaltete Verstärkerstufen, wie die in der unteren Schaltung 73 dargestellte Lösung, können unter der Verwendung eines zusätzlichen Bedämpfung, wie die durch das Netzwerk 106 dargestellte, ein solches Eingangssignal nach der Bedämpfung zur Auswerteeinheit 70 weiterreichen. Das Netzwerk 106 umfasst einen Widerstand 112 mit einem Widerstandswert R_{N1} und einen weiteren Widerstand 113 mit einem Widerstandswert R_{N2}.

Auf die Nutzung der hier beschriebenen Großsignalbedämpfung zur Signalbewertung nach und insbesondere auch während des Aussendens von akustischen Messimpulsen sei hier besonders hingewiesen. Da es sich bei den Elektro-Akustik-Wandlern zumeist um schmalbandige und damit leicht schwingfähige Gebilde handelt, insbesondere, wenn sie wie üblich mit einem im Sendesignalgenerator befindlichen Übertrager (Transformator) zusammen arbeiten, ist das Zeitverhalten des Signalverlaufes bezüglich der Amplitude, der Periodendauer und/oder der Frequenz usw. charakteristisch für den Zustand des Wandlers und der vor ihm befindlichen Objekte. Beispielsweise kann ein vor dem Wandler befindliches Objekt wie zum Beispiel eine Eisschicht oder eine Matschschicht am Fahrzeug und/oder ein eng vor dem Fahrzeug befindliches Objekt erkannt werden.

Insbesondere kann ein Abweichen der Sensoreigenschaften von den spezifizierten Werten bestimmt werden, um das Reparieren und/oder das Austauschen des Wandlers bei der nächsten Fahrzeugwartung zu veranlassen und/oder um sensorabhängige Fahrzeugfunktionen, wie zum Beispiel das sensorgeführte Aus- und/oder Einparken aufgrund der nicht spezifikationsgerechten Sensorparameter nicht anzubieten und/oder um die Schädigung des Fahrzeuges zu detektieren beziehungsweise um das Annähern von einen Schaden hervorrufenden Objekten, wie sie typischerweise bei einem Unfall oder auch im Fahrzeugnahfeld auftreten, rechtzeitig zu detektieren.

Zur Erzielung spezieller Filtereffekte können die hier verwendeten Widerstände in der Realisierung auch als komplexe Bauelemente, wie beispielsweise als Kombination von Widerstand und Kondensator ausgeführt werden. Dem Fachmann sind die dazu notwendigen Regeln der komplexen Widerstandsberechnung im Allgemeinen bekannt und daher nicht im Detail erläutert.

Neben der voranstehenden schriftlichen Offenbarung wird hiermit zur weiteren Offenbarung der Erfindung ergänzend auf die Darstellung in den Figuren 2a bis 7 Bezug genommen.

## Patentansprüche

1. Umfelderfassungsvorrichtung zur Bestimmung der Position und/oder der Bewegung von mindestens einem Objekt in der Umgebung eines Bewegungshilfsmittels mittels mindestens eines ausgesendeten und an dem Objekt reflektierten akustischen Pulses, wobei die Umfelderfassungsvorrichtung im Empfangspfad einen Elektro-Akustik-Wandler (40) zum Empfangen des mindestens einen an dem Objekt reflektierten und als Echopuls bezeichneten akustischen Pulses und eine Auswerteeinheit (70) zum Auswerten des Signals des Elektro-Akustik-Wandler (40) umfasst, die Umfelderfassungsvorrichtung dazu ausgebildet ist, das Signal des in dem Empfangspfad vorhandenen Elektro-Akustik-Wandlers mittels einer Bedämpfungsvorrichtung (101) zumindest während der Empfangszeit des Echopulses zu bedämpfen, und die Umfelderfassungsvorrichtung weiter eine Zeitsteuerung (100) umfasst, die dazu ausgebildet ist, die Bedämpfungsvorrichtung (101) derart zu steuern, dass eine Verringerung der Bedämpfung des Signals des Elektro-Akustik-Wandlers (40) zumindest während der Empfangszeit des Echopulses auftritt, **dadurch gekennzeichnet, dass** die Bedämpfungsvorrichtung (101) mehrere in dem Empfangspfad enthaltene Übertragungswege (72, 73) mit unterschiedlichen Bedämpfungen aufweist, die jeweils eine Eingangsverstärkerstufe (72, 73) der Auswerteeinheit (70) bilden, wobei die Umfelderfassungsvorrichtung dazu ausgebildet ist, das Signal des Elektro-Akustik-Wandlers (40) während unterschiedlicher Zeiträume mittels unterschiedlicher Übertragungswege (72, 73) der mittels der Zeitsteuerung gesteuerten Bedämpfungsvorrichtung (101) zu übertragen und dadurch mittels der sich zumindest während der Empfangszeit des Echopulses verringernden Bedämpfung zu bedämpfen.

2. Umfelderfassungsvorrichtung nach Anspruch 1, **dadurch gekennzeichnet, dass** die Umfelderfassungsvorrichtung dazu ausgebildet ist, das Zeitverhalten und/oder die Amplitude des Signals des mittels der Bedämpfungsvorrichtung (101) bedämpften Elektro-Akustik-Wandlers (40) zu bestimmen und das Signal des Elektro-Akustik-Wandlers (40) vor und/oder nach dem Ende des Sendens eines mittels des Elektro-Akustik-Wandlers (40) erzeugten akustischen Pulses zu bedämpfen.

3. Verfahren zur Bestimmung der Position und/oder der Bewegung von mindestens einem Objekt in der Umgebung eines Bewegungshilfsmittels mittels mindestens eines ausgesendeten und an dem Objekt reflektierten akustischen Pulses, wobei das Verfahren mittels einer Umfelderfassungsvorrichtung nach einem der vorangehenden Ansprüchen durchgeführt wird, **dadurch gekennzeichnet, dass** das Signal des in dem Empfangspfad der Umfelderfassungsvorrichtung vorhandenen Elektro-Akustik-Wandlers (40) zumindest während der Empfangszeit des an dem Objekt reflektierten und als Echopuls bezeichneten akustischen Pulses schaltungstechnisch mittels einer Bedämpfungsvorrichtung (101) mit mehreren im Empfangspfad umfassten Übertragungswegen (72, 73) mit unterschiedlichen Bedämpfungen, die jeweils eine Eingangsverstärkerstufe (72, 73) einer zum Auswerten des Signals des Elektro-Akustik-Wandlers (40) ausgebildeten Auswerteeinheit (70) bilden, mit einer Bedämpfung, die zumindest während der Empfangszeit verringert wird, dadurch bedämpft wird, dass das Signal des Elektro-Akustik-Wandlers (40) während unterschiedlicher Zeiträume mittels unterschiedlicher Übertragungswege (72, 73) der Bedämpfungsvorrichtung (101) übertragen wird.

4. Verfahren nach Anspruch 3, **dadurch gekennzeichnet, dass** das Zeitverhalten und/oder die Amplitude des mittels der Bedämpfungsvorrichtung (101) bedämpften Signals des Elektro-Akustik-Wandlers (40) bestimmt wird, wobei das Signal des Elektro-Akustik-Wandlers (40) vor und/oder nach dem Ende des Sendens eines mittels des Elektro-Akustik-Wandlers (40) erzeugten akustischen Pulses bedämpft wird.

5. Fahrzeug mit einer Umfelderfassungsvorrichtung nach einem der Ansprüchen 1 oder 2.

## Claims

1. Environment sensing apparatus for determining the position and/or the movement of at least one object in the surroundings of a mobility aid by means of at least one emitted acoustic pulse reflected from the object, wherein the environment sensing apparatus comprises, in the reception path, an electroacoustic transducer (40) for receiving the at least one acoustic pulse reflected from the object, and referred to as an echo pulse, and an evaluation unit (70) for evaluating the signal from the electroacoustic transducer (40), the environment sensing apparatus is configured to damp the signal from the electroacoustic transducer present in the reception path by means of a damping apparatus (101) at least during the reception time of the echo pulse, and the environment sensing apparatus further comprises a time controller (100) configured to control the damping apparatus (101) such that a decrease in the damping of the signal from the electroacoustic transducer (40) occurs at least during the reception time of the echo pulse, **characterized in that** the damping apparatus (101) has multiple transmission paths (72, 73), contained in the reception path, having different dampings that each form an input amplifier stage (72, 73) of the evaluation unit (70), wherein the environment sensing apparatus is configured to transmit the signal from the electroacoustic transducer (40) by means of different transmission paths (72, 73) of the damping apparatus (101) controlled by means of the time controller during different periods and, as a result, to damp said signal by means of the damping that decreases at least during the reception time of the echo pulse.

2. Environment sensing apparatus according to Claim 1, **characterized in that** the environment sensing apparatus is configured to determine the time response and/or the amplitude of the signal from the electroacoustic transducer (40) damped by means of the damping apparatus (101) and to damp the signal from the electroacoustic transducer (40) before and/or after the end of transmission of an acoustic pulse produced by means of the electroacoustic transducer (40).

3. Method for determining the position and/or the movement of at least one object in the surroundings of a mobility aid by means of at least one emitted acoustic pulse reflected from the object, wherein the method is performed by means of an environment sensing apparatus according to either of the preceding claims, **characterized in that** the signal from the electroacoustic transducer (40) present in the reception path of the environment sensing apparatus is damped by circuitry at least during the reception time of the acoustic pulse reflected from the object, and referred to as an echo pulse, by means of a damping apparatus (101) having multiple transmission paths (72, 73), comprised in the reception path, having different dampings, which each form an input amplifier stage (72, 73) of an evaluation unit (70) configured for evaluating the signal from the electroacoustic transducer (40), with a damping that is decreased at least during the reception time, by virtue of the signal from the electroacoustic transducer (40) being transmitted by means of different transmission paths (72, 73) of the damping apparatus (101) during different periods.

4. Method according to Claim 3, **characterized in that** the time response and/or the amplitude of the signal from the electroacoustic transducer (40) that is damped by means of the damping apparatus (101) is determined, wherein the signal from the electroacoustic transducer (40) is damped before and/or after the end of transmission of an acoustic pulse produced by means of the electroacoustic transducer (40) .

5. Vehicle having an environment sensing apparatus according to either of Claims 1 and 2.

## Revendications

1. Dispositif de balayage d'environnement destiné à déterminer la position et/ou le mouvement d'au moins un objet dans l'environnement d'un accessoire de mouvement au moyen d'au moins une impulsion sonore émise et réfléchie au niveau de l'objet, le dispositif de balayage d'environnement comprenant dans le trajet de réception un convertisseur électroacoustique (40) destiné à recevoir l'au moins une impulsion sonore réfléchie au niveau de l'objet et nommée impulsion d'écho et une unité d'interprétation (70) destinée à interpréter le signal du convertisseur électroacoustique (40), le dispositif de balayage d'environnement étant configuré pour atténuer le signal du convertisseur électroacoustique présent dans le trajet de réception au moyen d'un dispositif d'atténuation (101) au moins pendant le temps de réception de l'impulsion d'écho, et le dispositif de balayage d'environnement comprenant en outre une commande de temporisation (100) qui est configurée pour commander le dispositif d'atténuation (101) de telle sorte qu'une réduction de l'atténuation du signal du convertisseur électroacoustique (40) a lieu au moins pendant le temps de réception de l'impulsion d'écho, **caractérisé en ce que** le dispositif d'atténuation (101) possède plusieurs chemins de transmission (72, 73) ayant des atténuations différentes contenus dans le trajet de réception, lesquels forment respectivement un étage amplificateur d'entrée (72, 73) de l'unité d'interprétation (70), le dispositif de balayage d'environnement étant configuré pour transmettre le signal du convertisseur électroacoustique (40) pendant des périodes différentes au moyen des chemins de transmission (72, 73) du dispositif d'atténuation (101) commandé au moyen de la commande de temporisation et atténuer ainsi au moyen de l'atténuation qui est réduite au moins pendant le temps de réception de l'impulsion d'écho.

2. Dispositif de balayage d'environnement selon la revendication 1, **caractérisé en ce que** le dispositif de balayage d'environnement est configuré pour déterminer le comportement dans le temps et/ou l'amplitude du signal du convertisseur électroacoustique (40) atténué au moyen du dispositif d'atténuation (101) et pour atténuer le signal du convertisseur électroacoustique (40) avant et/ou après la fin de l'émission d'une impulsion sonore générée au moyen du convertisseur électroacoustique (40).

3. Procédé de détermination de la position et/ou du mouvement d'au moins un objet dans l'environnement d'un accessoire de mouvement au moyen d'au moins une impulsion sonore émise et réfléchie au niveau de l'objet, le procédé étant mis en oeuvre au moyen d'un dispositif de balayage d'environnement selon l'une des revendications précédentes, **caractérisé en ce que** le signal du convertisseur électroacoustique (40) présent dans le trajet de réception du dispositif de balayage d'environnement est atténué au moins pendant le temps de réception de l'impulsion sonore réfléchie au niveau de l'objet et nommée impulsion d'écho par technologie de circuit au moyen d'un dispositif d'atténuation (101) qui possède plusieurs chemins de transmission (72, 73) ayant des atténuations différentes contenus dans le trajet de réception, lesquels forment respectivement un étage amplificateur d'entrée (72, 73) d'une unité d'interprétation (70) configurée pour interpréter le signal du convertisseur électroacoustique (40), avec une atténuation qui est réduite au moins pendant le temps de réception, **en ce que** le signal du convertisseur électroacoustique (40) est transmis pendant des périodes différentes au moyen des chemins de transmission (72, 73) du dispositif d'atténuation (101).

4. Procédé selon la revendication 3, **caractérisé en ce que** le comportement dans le temps et/ou l'amplitude du signal du convertisseur électroacoustique (40) atténué au moyen du dispositif d'atténuation (101) est déterminé(e), le signal du convertisseur électroacoustique (40) étant atténué avant et/ou après la fin de l'émission d'une impulsion sonore générée au moyen du convertisseur électroacoustique (40).

5. Véhicule comprenant un dispositif de balayage d'environnement selon l'une des revendications 1 ou 2.
